Europäisches Patentamt

European Patent Office

Office européen des brevets

(19)

(11) Veröffentlichungsnummer: **0 102 560**

**A2**

(12) **EUROPÄISCHE PATENTANMELDUNG**

(21) Anmeldenummer: **83107981.9**

(22) Anmeldetag: **12.08.83**

(51) Int. Cl.³: **G 11 B 23/02**

(30) Priorität: **21.08.82 DE 3231207**

(43) Veröffentlichungstag der Anmeldung:
**14.03.84 Patentblatt 84/11**

(84) Benannte Vertragsstaaten:
**AT CH FR GB IT LI**

(71) Anmelder: **FRATELLI CASTIGLIONI S.r.l.**
**Via Simone 43**
**I-20011 Corbetta (Provinz Milano)(IT)**

(72) Erfinder: **Florjancic, Peter**
**Isarstrasse 251**
**D-8101 Wallgau(DE)**

(72) Erfinder: **Zwez, Hans-Jörg**
**Am Raineck 23**
**D-8102 Mittenwald(DE)**

(74) Vertreter: **Modiano, Guido et al,**
**MODIANO, JOSIF, PISANTY & STAUB Modiano &**
**Associati Via Meravigli, 16**
**I-20123 Milan(IT)**

(54) **Tonbandkassettenaufnahme aus Kunststoff.**

(57) Die Erfindung verbessert eine Tonbandkassettenaufnahme aus Kunststoff, bestehend aus einem tunnelartigen,
rechteckigen Gehäuse (1) und in diesem geführten und in der
ausgezogenen Stellung kippbaren Schublade, in dem die
Zusammenfassung mehrerer Schubladen (5a, 5b, 5c) in
platz- und materialsparender Weise und die Verbindung
mehrerer bereits mehrere Laden aufnehmender Gehäuse zu
einem Stapel in bequemer und einfacher Weise ermöglicht
wird. Hierzu sind innen an den Seitenwänden des Gehäuses
Führungsleisten für mehrere aufeinanderliegende Schubladen (5) angebracht und die Rückwände (8) der Schublade
und die Bereiche ihrer Seitenwände (7), die im eingeschobenen Zustand von den Führungsleisten erfaßt werden,
weisen eine um deren Stärke geringere Höhe als die
Schubladenvorderwände auf. Außerdem ist eine Waagerechthalterung der gezogenen Kassette (9) vorgesehen, die
aus der Unterfläche der Gehäusedecke oder der Unterfläche
(13) der über der gezogenen Lade befindlichen Lade einerseits und der Oberkante (14) der durch die hintere Ausnehmung der Lade hineinreichenden Vorderwand der darauf
befindlichen Lade besteht.

FIG. 6

## TONBANDKASSETTENAUFNAHME AUS KUNSTSTOFF

Die Erfindung richtet sich auf eine Tonbandkassettenaufnahme aus Kunststoff, wie sie z.B. in der DE-OS 29 17 806 beschrieben und dargestellt ist. Diese besteht aus einem tunnelartigen Gehäuse und einer von ihm aufgenommenen und in ihr für das Ziehen und Einschieben gleitbaren, eine Kassette aufnehmenden Schublade. Die Seitenwände der Schublade weisen an ihrer Unterseite eine dreieckförmige Ausnehmung auf, die sie in der ausgezogenen und abgekippten Stellung halten. Der Boden jeder Schublade weist ferner im hinteren Bereich, also nahe der Rückwand, eine sich über die ganze Breite erstreckende Ausnehmung auf.

Die vorliegende Erfindung verbessert die bekannte Tonbandkassettenaufnahme insofern, als sie die Zusammenfassung mehrerer Schubladen in plats- und materialsparender Weise erlaubt und die Verbindung mehrerer bereits mehrere Laden aufnehmender Gehäuse zu einem Stapel in bequemer und sicherer Weise gestattet.

Die Erfindung ist in der Zeichnung an einem Ausführungsbeispiel erläutert und anhand dieses nachfolgend beschrieben. Es stellen dar:

Fig. 1 einen Halbschnitt durch das Gehäuse einer Tonbandkassettenaufnahme nach der Erfindung, geschnitten längs der Linie I-I in Fig. 2 und in natürlichem Maßstab;

Fig. 2 eine Aufsicht auf den Gegenstand der Fig. 1;

Fig. 3 einen Schnitt durch den Gegenstand der Fig. 1 geschnitten längs der Linie III-III der Fig. 2;

Fig. 4 eine Seitenansicht einer Schublade für eine Tonbandkassettenaufnahme nach der Erfindung;

Fig. 5 eine - verkürzte - Vorderansicht einer Schublade nach Fig. 4; und

Fig. 6 eine erfindungsgemäße Tonbandkassettenaufnahme in der Seitenansicht mit einer gezogenen und abgekippten Schublade.

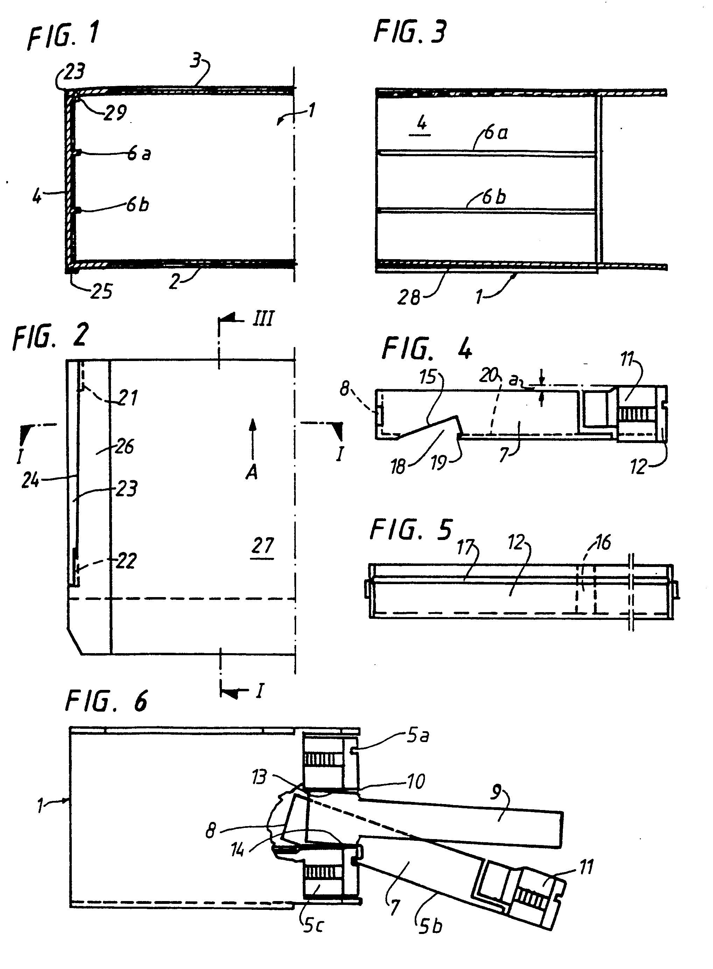

Das allgemein mit 1 bezeichnete, aus Boden 2, Decke 3 und den beiden Seitenwänden 4 bestehende Gehäuse kann mindestens zwei, in der dargestellten Ausführungsform jedoch drei Schubladen 5a, 5b, 5c (Fig. 6) aufnehmen, von denen jede für die Lagerung einer genormten Tonbandkassette bestimmt ist.

Im eingeschobenen Zustand liegen die Schubladen 5a und 5b auf innen von den Seitenwänden 4 des Gehäuses abstehenden dünnen und schmalen Führungsleisten 6a, 6b auf, auf denen ihre Unterflächen beim Ausziehen und Ein- schieben gleiten, während die unterste Lade 5c auf der Innenfläche des Bodens 2 gleitet.

Die bis auf die nachfolgend beschriebenen Ab- weichungen im Prinzip nach den Schubladen gemäß der DE-OS 29 17 806 gestalteten und funktionierenden Schub- laden 5 sind demnach zumindest zu zweit übereinander und ohne Zwischenboden im Gehäuse 1 untergebracht.

Dies wird dadurch ermöglicht, daß die Seitenwände 7 der Schublade und ihre Rückwand 8 die durch die Dicke einer Kassette 9 an der in der Lade hinten liegenden Seite mit dem trapezförmigen Teil 10 bestimmte Mindesthöhe nur außerhalb der Seitenwände 4 eines Ge- häuses, also nur mit ihrem Verriegelungsteil 11 ein- nehmen. Dies ist in Fig. 4 durch die Höhendifferenz a zwischen der Höhe des Verriegelungsteils 11 und Vorderwand 12 gegenüber den Seitenwänden 7 und der Rückwand 8 dargestellt. Diese Höhendifferenz a ist auch gleich dem Abstand zweier Laden im Gehäuse und in diesen Abstand ragen die Führungsleisten 6 hinein. Damit weist die erfindungsgemäße Aufnahme eine äußerst geringe Bauhöhe auf, da die Schubladen im Gehäuse praktisch ohne Zwischenräume untergebracht sind.

Wenn gemäß Fig. 6 eine Schublade 5b gezogen ist, so wird die in ihr befindliche Kassette 9 für die bequeme Entnahme dadurch waagerecht oder fast waagerecht gehalten, daß sich die Oberfläche des Trapezes 10 gegen die Unterfläche 13 des Bodens der darüberliegenden Lade 5a einerseits und auf der Oberkante 14 der Vorderwand 12 der Schublade 5c andererseits abstützt, was dadurch ermöglicht wird, daß die Vorderwand 12 der Lade 5c durch die Bodenausnehmung 15 in der Lade 5b hindurchreicht.

Unterstützt und gesichert wird dieses Waagerechthalten der Kassette 9 bei gezogener Lade dadurch, daß diese beim Kippen mit dem oberen Bereich der sich dabei schrägstellenden Rückwand 8' die Kassette ein Stück nach vorne schiebt, die damit mit ihrer Unterfläche in den Bereich einer Halte- und Stütznase 16 an der Innenseite der Vorderwand 12 der darunterliegenden Schublade kommt und auf dieser aufliegen würde, wenn sie nicht ganz waagerecht gehalten ist. Die Nase 16 ist deshalb nicht nur eine Stütz-, sondern auch eine Haltenase, weil sie die Kassette bei eingeschobener Schublade

- 4 -

rüttelfrei hält. Natürlich können auch mehrere derartige Nasen 16 im Abstand vorgesehen sein.

In der gezogenen und gekippten Stellung wird die Schublade dadurch gehalten, daß sich quer über die Vorderwand 12 oder über einen größeren Teil derselben eine schmale Nut 17 erstreckt, in die eine in die seitlichen dreieckförmigen, das Kippen ermöglichenden Ausnehmungen 18 hineinreichende Leiste 19 einrastet. Diese Leiste 19 besteht aus dem in die Ausnehmung 15 hineinreichenden, verlängerten Boden 20 der Lade. Damit rastet beim Kippen jeweils die Leiste 19 der einen Lade in die Nut 17 der darunterliegenden Lade ein.

Jedes Gehäuse 1 kann dafür eingerichtet sein, mit einem oder mehreren gleichen anderen Gehäuse(n) zu einem Stapel verbunden zu werden.

Hierfür weist z.B. gemäß Fig. 2 die Decke 3 (oder der Boden 2) eines Gehäuses auf beiden Seiten zwei im Abstand voneinander und seitlich gegeneinander versetzt liegende Hinterschneidungen 21, 22 auf, die beide von einer Führungsnut 23 ausgehen. Die Innenkanten 24 der Führungsnut 23 können nach der zeichnerischen Darstellung sowohl in Längs- wie in Querrichtung, also in der Aufsicht der Fig. 2 wie im Schnitt der Fig. 1, schräg verlaufend gestaltet sein. Auf der Unterseite des Bodens 2 (oder der Decke 3) sind dann entsprechende Leisten 25 angebracht, deren beide Enden so als Stege gestaltet sind, daß sie in die Hinterschneidungen 21, 22 eingreifen. Diese Gestaltung, also bereits nur zwei kürzere im Abstand und seitlich zueinander versetzt liegende Hinterschneidungen vorzusehen, aber noch ver-

starkt durch die Schräggestaltung in zwei zueinander senkrechten Richtungen, ermöglicht das bequeme und leichte Aufstecken und Anschieben in Pfeilrichtung A sowie Finden der Hinterschneidungen im Gegensatz zu den üblichen, über die ganze Länge sich erstreckenden Schwelbenschwanz-Verbindungen.

Gemäß einem weiteren alternativen Merkmal der Erfindung verlaufen die Seitenbereiche 26 in bzw. an denen sich die Hinterschneidungen 21, 22, Führungsnuten 23 und Leisten 25 befinden, waagerecht, während der größere Zwischenbereich 27 sowohl auf der Außenfläche des Bodens 2 wie der Außenfläche der Decke 3 einen leichten, aus Fig. 3 ersichtlichen Anzug 28 aufweist, der das Entformen nach dem Spritzen erleichtert, während die waagerechten Bereiche 26 garantieren, daß eine Verbindung mehrerer Gehäuse nicht zu einem gekrümmten Stapel führt.

Am Übergang der Seitenwände 4 zur Decke 3 eines Gehäuses ist innen eine Verstärkung 29 vorgesehen, die für die Nuten 23 und Hinterschneidungen 21, 22 den erforderlichen Querschnitt abgibt.

PATENTANSPRÜCHE

1. Tonbandkassettenaufnahme aus Kunststoff, bestehend aus einem tunnelartigen, rechteckigen Gehäuse (1) und in diesem geführter und in der ausgezogenen Stellung kippbaren Schublade (5), dadurch gekennzeichnet, daß innen an den Seitenwänden (4) des Gehäuses Führungsleisten (6) für mehrere übereinanderliegende Schubladen (5) angebracht sind, und daß die Rückwand (8) der Schublade und die Bereiche ihrer Seitenwände (7), die im eingeschobenen Zustand von den Führungsleisten erfaßt werden, eine um deren Stärke (a) geringere Höhe als die Schubladenvorderwand (12) aufweisen.

2. Tonbandkassettenaufnahme nach dem Anspruch 1, gekennzeichnet durch eine Waagerechthalterung der mit einer Schublade gezogenen Kassette (9), die aus der Unterfläche der Gehäusedecke oder der Unterfläche (13) der über der gezogenen Lade befindlichen Lade einerseits und der Oberkante (14) der durch die hintere Ausnehmung (15) der Lade hineinreichenden Vorderwand der darunter befindlichen Lade besteht.

3. Tonbandkassettenaufnahme nach dem Anspruch 1, dadurch gekennzeichnet, daß der Boden (20) der Lade oder ein größerer Teil derselben in den Bereich der dreieckförmigen, das Kippen der Lade ermöglichenden Ausnehmungen (18) der Seitenwände (7) hineinreicht, und daß auf der Vorderseite der Vorderwand (12) der Lade eine entsprechende Nut (17) für die im Gehäuse darunter liegende Lade vorgesehen ist.

4. Tonbandkassettenaufnahme nach dem Anspruch 1, gekennzeichnet durch eine oder mehrere Halte- und Stütznasen (16) an der Innenseite der Vorderwand (12) der Schublade.

5. Tonbandkassettenaufnahme nach dem Anspruch 1, dadurch gekennzeichnet, daß an den Außenkanten der Oberfläche der Decke (oder des Bodens) des Gehäuses zwei im Abstand hintereinander und seitlich gegeneinander versetzt liegende, von einer Führungsnut (23) ausgehende Hinterschneidungen (21,22) vorgesehen sind, denen auf der Oberfläche des Bodens (oder der Decke) des Gehäuses Führungsleisten (25) mit in die Hinterschneidungen eingreifenden Stegen entsprechen.

6. Tonbandkassettenaufnahme nach den Ansprüchen 1 und 5, dadurch gekennzeichnet, daß die Führungsnuten (23) und -leisten (25) schräg aufeinanderzu verlaufen.

7. Tonbandkassettenaufnahme nach den Ansprüchen 1 und 6, dadurch gekennzeichnet, daß im Gehäuse am Übergang von der Seitenwand (4) zur Decke (3) der Querschnitt (29) für die Bildung der Führungsnut verstärkt ist.

8. Tonbandkassettenaufnahme nach dem Anspruch 5, dadurch gekennzeichnet, daß nur die Führungsnuten (23) und Hinterschneidungen aufnehmenden Seitenbereiche (26) von Decke (3) und Boden (2) parallel zueinander liegen, während die Zwischenbereiche (27) schräg aufeinanderzu verlaufen.

**FIG. 1**

**FIG. 2**

**FIG. 3**

**FIG. 4**

**FIG. 5**

**FIG. 6**